# EUROPÄISCHE PATENTSCHRIFT

(11) **EP 4 025 817 B1**
(45) Veröffentlichungstag und Bekanntmachung des Hinweises auf die Patenterteilung: **22.11.2023**
(21) Anmeldenummer: 20780901.3
(22) Anmeldetag: 01.09.2020
(51) Int. Cl.: F16L 37/088

(54) **STECKVERBINDER UND GEGENSTECKVERBINDER ZUM VERBINDEN VON LEITUNGEN FÜR FLÜSSIGE ODER GASFÖRMIGE MEDIEN**
PLUG CONNECTOR AND COMPLEMENTARY PLUG CONNECTOR FOR CONNECTING LINES FOR LIQUID OR GASEOUS MEDIA
PIÈCE DE RACCORD ENFICHABLE ET PIÈCE DE RACCORD ENFICHABLE CONJUGUÉE POUR RELIER DES CONDUITES POUR SUBSTANCES LIQUIDES OU GAZEUSES

(30) Priorität: 03.09.2019 AT 507682019
(43) Veröffentlichungstag der Anmeldung: 13.07.2022
(73) Patentinhaber: Henn GmbH & Co KG., 6850 Dornbirn (AT)
(72) Erfinder: BALDREICH, Wolfgang, 6912 Hörbranz (AT)
(74) Vertreter: Burger, Hannes
(86) Internationale Anmeldenummer: PCT/AT2020/060327
(87) Internationale Veröffentlichungsnummer: WO 2021/042148

(56) Entgegenhaltungen:
- EP-A1- 2 251 581
- EP-A1- 3 527 867
- WO-A1-2011/106805

## Beschreibung

Die Erfindung betrifft einen Steckverbinder und Gegensteckverbinder zum Verbinden von Leitungen für flüssige oder gasförmige Medien, sowie ein Verfahren zum Herstellen einer Steckverbindung zwischen dem Steckverbinder und dem Gegensteckverbinder.

Aus der WO 2018/144902 A1, der WO 2018/102213 A1 und der EP 3 179 148 A1 sind diverse Steckverbinder bekannt. Die aus diesen Dokumenten bekannten Steckverbinder weisen den Nachteil auf, dass nicht eindeutig festzustellen ist, ob die Steckverbinder richtig miteinander gefügt sind.

Aus der EP 3 527 867 A1, der WO 2011/106805 A1 und der EP 2 251 581 A1 sind weitere Steckverbinder bekannt.

Aufgabe der vorliegenden Erfindung war es, die Nachteile des Standes der Technik zu überwinden und einen Steckverbinder und ein Verfahren zum Herstellen einer Steckverbindung zwischen dem Steckverbinder und einem Gegensteckverbinder zur Verfügung zu stellen, welche die Kontrollierbarkeit der korrekten Verbindung verbessern.

Diese Aufgabe wird durch eine Vorrichtung und ein Verfahren gemäß den Ansprüchen gelöst.

Erfindungsgemäß ist ein Steckverbinder und Gegensteckverbinder zum Verbinden von Leitungen für flüssige oder gasförmige Medien ausgebildet. Der Steckverbinder umfasst
- einen Verbinderkörper, welcher zumindest einen ersten Mantelabschnitt aufweist, welcher einen Aufnahmeraum zur Aufnahme eines Teils des Gegensteckverbinders bildet, wobei im ersten Mantelabschnitt zumindest zwei Durchtrittsöffnungen ausgebildet sind;
- ein Arretierungselement, welches zum Sichern des Steckverbinders relativ zum Gegensteckverbinder vorgesehen ist, wobei die Durchtrittsöffnungen im ersten Mantelabschnitt des Verbinderkörpers zur Aufnahme des Arretierungselementes dienen. Weiters ist ein Anzeigeelement ausgebildet, und eine Führungsaufnahme zur verschiebbaren Aufnahme des Anzeigeelementes ausgebildet, wobei das Anzeigeelement derart in der Führungsaufnahme aufgenommen ist, dass das Anzeigeelement zwischen einer Ruheposition und einer Anzeigeposition verschiebbar ist, wobei das Anzeigeelement eine Anzeigefläche aufweist, welche in der Anzeigeposition des Anzeigeelementes sichtbar und in der Ruheposition des Anzeigeelementes zumindest teilweise verdeckt ist, wobei die Anzeigefläche, wenn sie sichtbar ist, zur Signalisierung dient, dass der Steckverbinder korrekt in den Gegensteckverbinder eingesteckt ist und/oder dass das Arretierungselement korrekt arretiert ist.

Der erfindungsgemäße Steckverbinder bringt den überraschenden Vorteil mit sich, dass durch die erfindungsgemäße Ausbildung des Anzeigeelementes eindeutig erkannt werden kann, ob der Steckverbinder korrekt in den Gegensteckverbinder eingesteckt ist und/oder ob das Arretierungselement korrekt arretiert ist.

Weiters kann es zweckmäßig sein, wenn das Anzeigeelement in dessen Ruheposition innerhalb der Führungsaufnahme angeordnet ist und in dessen Anzeigeposition zumindest teilweise gegenüber der Führungsaufnahme hervorsteht. Durch diese Maßnahme lässt sich die Anzeigeposition des Anzeigeelementes überraschend leicht realisieren. Darüber hinaus dient dies dazu, dass die einfache Identifizierbarkeit der Anzeigeposition des Anzeigeelementes verbessert wird.

Ferner kann vorgesehen sein, dass das Anzeigeelement derart ausgebildet ist, dass es sich automatisch von der Ruheposition in die Anzeigeposition verschiebt, wenn der Steckverbinder korrekt in den Gegensteckverbinder eingesteckt ist und/oder wenn das Arretierungselement korrekt arretiert ist. Dies bringt den Vorteil mit sich, dass die Anzeige einer korrekten Verbindung zwischen Gegensteckverbinder und Steckverbinder bzw. der korrekten Arretierung des Arretierungselementes einfach angezeigt werden kann.

Darüber hinaus kann vorgesehen sein, dass das Anzeigeelement an einem Haltebereich des Arretierungselementes angeordnet ist. Besonders bei einer derartigen Anordnung des Anzeigeelementes kann angezeigt werden, wenn das Arretierungselement korrekt arretiert ist, und gleichzeitig der Steckverbinder korrekt in den Gegensteckverbinder eingesteckt ist. Somit kann durch diese Maßnahmen die maximale Sicherheit bezüglich der korrekten Verbindung zwischen Steckverbinder und Gegensteckverbinder erlangt werden.

Vorteilhaft ist auch eine Ausprägung, gemäß welcher vorgesehen sein kann, dass die Führungsaufnahme in Form einer Führungshülse ausgebildet ist, welche mit dem Haltebereich des Arretierungselementes gekoppelt, insbesondere verschweißt, ist. Besonders bei einer derartigen Anordnung des Anzeigeelementes kann angezeigt werden, wenn das Arretierungselementes korrekt arretiert ist, und gleichzeitig der Steckverbinder korrekt in den Gegensteckverbinder eingesteckt ist. Somit kann durch diese Maßnahmen die maximale Anzeigesicherheit bezüglich der korrekten Verbindung zwischen Steckverbinder und Gegensteckverbinder erlangt werden.

Eine derartige Schweißverbindung kann beispielsweise durch Punktschweißen hergestellt werden. Insbesondere können hierbei die Führungsaufnahme und das Arretierungselement aneinandergepresst werden und mit elektrischem Strom beaufschlagt werden.

In einer weiteren Alternative ist es auch denkbar, dass die Schweißverbindung beispielsweise durch Laserschweißen hergestellt wird.

In einer alternativen Ausführungsvariante ist es auch denkbar, dass die Führungsaufnahme aus einem Kunststoffteil gebildet ist. In diesem Fall kann die Führungsaufnahme durch eine Rastverbindung mit dem Arretierungselement verbunden sein.

Gemäß einer Weiterbildung ist es möglich, dass die Führungsaufnahme als Blechumformteil ausgebildet ist. Dies bringt den Vorteil mit sich, dass eine als Blechumformteil ausgebildete Führungsaufnahme in einer Serienfertigung leicht hergestellt werden kann und darüber hinaus ausreichende Fertigungstoleranzen aufweisen kann, sodass eine korrekte Funktion des Anzeigeelementes erreicht werden kann. Insbesondere kann dadurch erreicht werden, dass das Anzeigeelement leichtgängig in der Führungsaufnahme verschoben werden kann.

Ferner kann es zweckmäßig sein, wenn ein Federelement ausgebildet ist, mittels welchem das Anzeigeelement in seine Ruheposition vorgespannt ist. Durch diese Maßnahme kann erreicht werden, dass bei einem erneuten Öffnen des Arretierungselementes bzw. bei einem Lösen des Gegensteckverbinders vom Steckverbinder das Anzeigeelement wieder in seine Ruheposition gedrängt wird und somit ersichtlich ist, dass der Steckverbinder und der Gegensteckverbinder nicht mehr korrekt miteinander gekoppelt sind.

Darüber hinaus kann vorgesehen sein, dass das Anzeigeelement mit einem Betätigungsbereich gekoppelt ist, welcher größer ist als eine Nutbreite einer Sicherungsnut des Gegensteckverbinders, wobei der Betätigungsbereich derart ausgebildet ist, dass es in einem Außenbereich der Sicherungsnut anliegt, so dass es das Anzeigeelement in die Anzeigeposition drängt, wenn alle Rastbereiche des Arretierungselementes in die Sicherungsnut des Gegensteckverbinders eingreifen. Besonders bei einer derartigen Anordnung des Anzeigeelementes kann angezeigt werden, wenn das Arretierungselementes korrekt arretiert ist, und gleichzeitig der Steckverbinder korrekt in den Gegensteckverbinder eingesteckt ist. Somit kann durch diese Maßnahmen die maximale Sicherheit bezüglich der korrekten Verbindung zwischen Steckverbinder und Gegensteckverbinder erlangt werden.

Weiters kann vorgesehen sein, dass im ersten Mantelabschnitt eine Betätigungsausnehmung ausgebildet ist, durch welche der Betätigungsbereich in den Aufnahmeraum ragt. Dies bringt den Vorteil mit sich, dass das Anzeigeelement, insbesondere der Betätigungsbereich des Anzeigeelementes, mit dem Gegensteckverbinder in Anlage gebracht werden kann, um die korrekte Arretierung des Gegensteckverbinders im Steckverbinder bzw. die korrekte Arretierung des Arretierungselementes anzeigen zu können.

Insbesondere kann es vorteilhaft sein, wenn die Anzeigefläche zumindest bereichsweise in einer entsprechenden Signalfarbe, wie etwa grün ausgebildet ist und/oder dass an der Anzeigefläche ein Schriftzug, wie etwa "OK" angeordnet ist. Durch diese Maßnahme kann erreicht werden, dass auch nicht fachkundige bzw. nicht geschulte Personen eine korrekte Arretierung des Arretierungselementes bzw. eine korrekte Fügung des Gegensteckverbinders mit dem Steckverbinder erkannt werden kann.

Ferner kann vorgesehen sein, dass das Anzeigeelement eine Codierungsfläche aufweist, welche in der Anzeigeposition des Anzeigeelementes sichtbar und in der Ruheposition des Anzeigeelementes zumindest teilweise verdeckt ist, wobei die Codierungsfläche einen maschinenlesbaren Code, wie etwa einen Data Matrix Code, aufweist. Durch diese Maßnahme kann erreicht werden, dass nicht nur eine optische Kontrolle der korrekten Positionierung durch den Maschinenbediener erfolgen kann, sondern dass auch eine maschinenlesbare Kontrolle erfolgen kann bzw. dass die Information entsprechend abgespeichert werden kann.

Weiters ist es auch denkbar, dass die Information der maschinenlesbaren Kontrolle abgespeichert wird, und dazu genutzt wird, um weitere Fertigungsschritte freizugeben bzw. diese zu verhindern. Somit kann erreicht werden, dass ein Bedienerfehler weitestgehend ausgeschlossen werden kann.

Die Anzeigefläche kann gleichzeitig als Codierungsfläche dienen. Daher kann der maschinenlesbare Code direkt an der Anzeigefläche angeordnet sein.

Erfindungsgemäß ist ein Verfahren zum Herstellen einer Steckverbindung zwischen einem Steckverbinder zum Verbinden von Leitungen für flüssige oder gasförmige Medien und einem Gegensteckverbinder gemäß Anspruch 9 vorgesehen. Das Verfahren umfasst die Verfahrensschritte:
- Bereitstellen des Steckverbinders mit einem Verbinderkörper, welcher zumindest einen ersten Mantelabschnitt aufweist, welcher einen Aufnahmeraum zur Aufnahme eines Teils des Gegensteckverbinders bildet, wobei im ersten Mantelabschnitt zumindest zwei Durchtrittsöffnungen ausgebildet sind und einem Arretierungselement, welches zum Sichern des Steckverbinders relativ zum Gegensteckverbinder vorgesehen ist, wobei die Durchtrittsöffnungen im ersten Mantelabschnitt des Verbinderkörpers zur Aufnahme des Arretierungselementes dienen;
- Bereitstellen des Gegensteckverbinders;
- Einstecken des Gegensteckverbinders in den Aufnahmeraum des Steckverbinders;
- Sichern des Gegensteckverbinders im Aufnahmeraum des Steckverbinders mittels des Arretierungselementes.

Weiters ist ein Anzeigeelement ausgebildet, und eine Führungsaufnahme zur verschiebbaren Aufnahme des Anzeigeelementes ausgebildet, wobei das Anzeigeelement derart in der Führungsaufnahme aufgenommen ist, dass das Anzeigeelement von einer Ruheposition in eine Anzeigeposition verschoben wird, wenn der Steckverbinder korrekt in den Gegensteckverbinder eingesteckt wird und/oder wenn das Arretierungselement korrekt arretiert wird, wobei das Anzeigeelement eine Anzeigefläche aufweist, welche in der Anzeigeposition des Anzeigeelementes sichtbar und in der Ruheposition des Anzeigeelementes zumindest teilweise verdeckt ist, wobei die Anzeigefläche, wenn sie sichtbar ist, zur Signalisierung dient, dass der Steckverbinder korrekt in den Gegensteckverbinder eingesteckt ist und/oder wenn das Arretierungselement korrekt arretiert ist.

Von Vorteil am erfindungsgemäßen Verfahren ist, dass durch die Verwendung eines erfindungsgemäßen Anzeigeelementes eindeutig erkannt werden kann, ob der Steckverbinder korrekt in den Gegensteckverbinder eingesteckt ist und/oder ob das Arretierungselement korrekt arretiert ist.

Vorteilhaft ist auch eine Ausprägung, gemäß welcher vorgesehen sein kann, dass eine Codierungsfläche am Anzeigeelement sichtbar wird, wenn der Steckverbinder korrekt in den Gegensteckverbinder eingesteckt ist und/oder wenn das Arretierungselement korrekt arretiert ist, wobei ein an der Codierungsfläche angeordneter maschinenlesbarer Code mittels eines Lesegerätes erfasst wird und in einem System zur Datenverarbeitung gespeichert wird. Durch diese Maßnahme kann erreicht werden, dass nicht nur eine optische Kontrolle der korrekten Positionierung durch den Maschinenbediener erfolgen kann, sondern dass auch eine maschinenlesbare Kontrolle erfolgen kann bzw. dass die Information entsprechend abgespeichert werden kann.

Gemäß einer Weiterbildung ist es möglich, dass sich das Anzeigeelement automatisch von der Anzeigeposition zurück in die Ruheposition verschiebt, wenn das Arretierungselement geöffnet wird. Durch diese Maßnahme kann erreicht werden, dass bei einem erneuten Öffnen des Arretierungselementes bzw. bei einem Lösen des Gegensteckverbinders vom Steckverbinder das Anzeigeelement wieder in seine Ruheposition gedrängt wird und somit ersichtlich ist, dass der Steckverbinder und der Gegensteckverbinder nicht mehr korrekt miteinander gekoppelt sind.

Weiters kann vorgesehen sein, dass das Anzeigeelement parallel zur Längsachse des Steckverbinders relativ zur Führungsaufnahme verschiebbar ist.

In einer alternativen Ausführungsvariante kann vorgesehen sein, dass das Anzeigeelement quer zur Längsachse des Steckverbinders relativ zur Führungsaufnahme verschiebbar ist.

Weiters kann vorgesehen sein, dass Verbinderkörper einen Ringraum aufweist, der zwischen einem hülsenförmigen, im Querschnitt eine zentrale Längsachse des Steckverbinders umgebenden, ersten Mantelabschnitt und einem hülsenförmigen, im Querschnitt die zentrale Längsachse umgebenden, zweiten Mantelabschnitt des Steckverbinders liegt, wobei der erste Mantelabschnitt vom zweiten Mantelabschnitt umgeben ist und der erste Mantelabschnitt des Verbinderkörpers mit dem zweiten Mantelabschnitt an einem ersten Endabschnitt durch einen ersten Stirnwandabschnitt verbunden ist und die Mantelabschnitte an einem zweiten Endabschnitt offen zueinander sind.

Weiters kann vorgesehen sein, dass das Anzeigeelement aus einem Kunststoff gebildet ist. Insbesondere kann vorgesehen sein, dass das Anzeigeelement als Spritzgussteil ausgebildet ist.

Dass die Anzeigefläche des Anzeigeelementes in dessen Ruheposition zumindest teilweise verdeckt ist, bedeutet, dass die Anzeigefläche teilweise sichtbar sein kann, jedoch eindeutig erkennbar ist, dass der Steckverbinder noch nicht korrekt in den Gegensteckverbinder eingesteckt ist und/oder dass das Arretierungselement noch nicht korrekt arretiert ist. Beispielsweise kann der maschinenlesbare Code teilweise verdeckt sein, sodass er nicht ausgelesen werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung einer ersten Ausführungsvariante einer Steckerbaugruppe in einem Viertelschnitt;
- Fig. 2: ein Querschnitt der ersten Ausführungsvariante des Steckverbinders mit Schnittführung im Bereich eines Arretierungselementes;
- Fig. 3: eine Detailansicht der ersten Ausführungsvariante des Steckverbinders, wobei sich ein Anzeigeelement in einer Ruhestellung befindet;
- Fig. 4: eine Detailansicht der ersten Ausführungsvariante des Steckverbinders, wobei sich das Anzeigeelement in einer Anzeigestellung befindet;
- Fig. 5: eine Detailansicht der ersten Ausführungsvariante des Steckverbinders, wobei das Arretierungselement teilweise geschnitten dargestellt ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

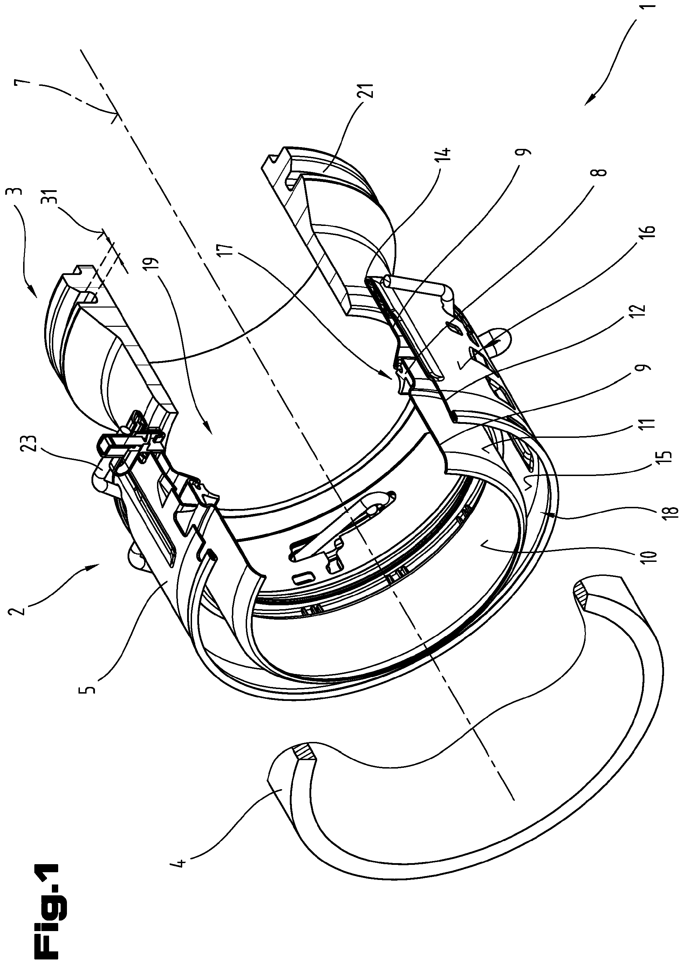

Fig. 1 zeigt eine perspektivische Ansicht einer Steckerbaugruppe 1 mit einem Steckverbinder 2, wobei diese in einem Viertelschnitt geschnitten dargestellt sind. Weiters ist in Fig. 1 schematisch ein Gegensteckverbinder 3 dargestellt, welcher mit der Steckerbaugruppe 1 verbindbar ist. Das Zusammenwirken zwischen Steckerbaugruppe 1 und einem Gegensteckverbinder 3 ist in der AT 509 196 B1 hinlänglich beschrieben.

Weiters ist schematisch ein Rohr 4 dargestellt, an welches der Steckverbinder 2 gekoppelt sein kann. Das Rohr 4 kann beispielsweise ein starres Element, wie etwa ein Kunststoffrohr sein. In einer andern Ausführungsvariante kann das Rohr 4 als flexible Leitung aus einem Gummiwerkstoff ausgebildet sein.

Der Steckverbinder 2 umfasst einen Verbinderkörper 5, welcher vorzugsweise als einteiliges Umformteil, etwa als Tiefziehteil, insbesondere aus einem Edelstahlblech gebildet ist.

Die Steckerbaugruppe 1 wird vorzugsweise in einem Kraftfahrzeug, insbesondere in einem straßengebundenen Kraftfahrzeug mit Verbrennungsmotor, wie etwa einem PKW oder einem LKW eingesetzt.

Natürlich ist es auch denkbar, dass die Steckerbaugruppe 1 in einer sonstigen Anwendung, insbesondere einer sonstigen Anwendung in einem Verbrennungsmotor verwendet wird. Dies kann beispielsweise der Einsatz der Steckerbaugruppe 1 in einem stationären Aggregat, in einem Schiffsmotor, in einem Flugzeugmotor, in einer Baumaschine usw. sein.

Im Speziellen kann die Steckerbaugruppe 1 zum Verbinden verschiedener Bauteile der Frischluftzuführung zum Verbrennungsmotor eingesetzt werden. Beispielsweise kann vorgesehen sein, dass der Steckverbinder 2 mit dem entsprechenden Gegensteckverbinder 3 zur Verbindung zweier Teile im Ansaugbereich eines Turboladers vorgesehen ist. Weiters kann beispielsweise auch vorgesehen sein, dass eine derartige Steckerbaugruppe 1 in der vom Turbolader abgehenden Druckseite zur Verbindung zweier Bauteile eingesetzt wird.

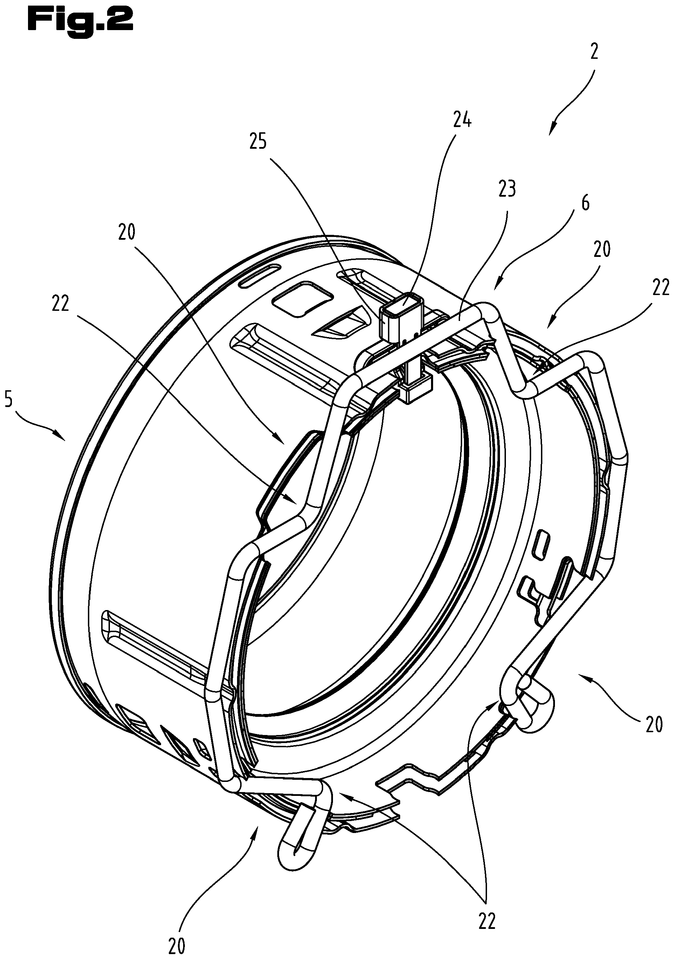

Fig. 2 zeigt einen Querschnitt des Steckverbinder 2 wobei die Schnittführung so gewählt wurde, dass ein im Steckverbinder 2 verbautes Arretierungselement 6 zum Sichern des Steckverbinders 2 und des Gegensteckverbinders 3 zueinander ersichtlich ist.

Das Arretierungselement 6 ist derart konstruiert, dass es leicht aktiviert und deaktiviert werden kann, sodass der Steckverbinder 2 und der Gegensteckverbinder 3 bedarfsweise voneinander getrennt bzw. miteinander verbunden werden können. Das Arretierungselement 6 kann in eine Raststellung gebracht werden, in welcher der Steckverbinder 2 und der Gegensteckverbinder 3 zueinander gesichert sind. Weiters kann das Arretierungselement 6 in eine Freigabestellung gebracht werden, in welcher der Gegensteckverbinder 3 in den Steckverbinder 2 eingesetzt oder aus diesem herausgenommen werden kann. Insbesondere kann vorgesehen sein, dass das Arretierungselement 6 in Form eines Federelementes ausgebildet ist.

Insbesondere kann vorgesehen sein, dass der Gegensteckverbinder 3 rotationssymmetrisch um eine Längsachse 7 des Steckverbinders 2 ausgebildet ist.

Wie in Fig. 1 gut ersichtlich, kann der Steckverbinder 2 neben dem Verbinderkörper 5 eine Steckerdichtung 8 umfassen, welche im Verbinderkörper 5 aufgenommen ist. Die Steckerdichtung 8 dient dazu, um den Steckverbinder im zusammengesteckten Zustand mit dem Gegensteckverbinder 3 ausreichend abdichten zu können.

Wie in Fig. 1 ersichtlich, ist am Verbinderkörper 5 ein erster Mantelabschnitt 9 ausgebildet, welcher die zentrale Längsachse 7 des Steckverbinders 2 hülsenförmig umgibt. Mit anderen Worten ausgedrückt, ist der erste Mantelabschnitt 9 ein rotationssymmetrischer Hohlzylinder.

Der erste Mantelabschnitt 9 weist eine innenliegende Mantelfläche 10 und eine außenliegende Mantelfläche 11 auf. Den ersten Mantelabschnitt 9 umgibt ein zweiter Mantelabschnitt 12, welcher ebenfalls bezüglich der zentralen Längsachse 7 rotationssymmetrisch ausgebildet ist. Der erste Mantelabschnitt 9 ist mit dem zweiten Mantelabschnitt 12 an einem ersten Endabschnitt 13 mittels eines ersten Stirnwandabschnittes 14 verbunden. Der erste Stirnwandabschnitt 14 kann verschiedenartig ausgebildet sein. Insbesondere kann vorgesehen sein, dass der erste Stirnwandabschnittes 14 in Form eines Falzes ausgebildet ist, wobei der zweite Mantelabschnitt 12 gegenüber dem ersten Mantelabschnitt 9 um etwa 180° umgeschlagen ist, wodurch der zweite Mantelabschnitt 12 den ersten Mantelabschnitt 9 umgebend angeordnet ist.

Gleich wie der erste Mantelabschnitt 9 weist auch der zweite Mantelabschnitt 12 eine innenliegende Mantelfläche 15 und eine außenliegende Mantelfläche 16 auf.

Der erste Mantelabschnitt 9 ist im dargestellten Ausführungsbeispiel abgestuft ausgeführt. Dabei kann vorgesehen sein, dass an den ersten Mantelabschnitt 9 an der gegenüberliegenden Seite des ersten Endabschnittes 13 des Steckverbinders 2, eine Dichtungsaufnahme 17 anschließt, welche ebenfalls im Verbinderkörper 5 ausgeformt ist. In einer derartigen Dichtungsaufnahme 17 kann eine Steckerdichtung 8 aufgenommen sein. Weiters kann vorgesehen sein, dass zwischen dem ersten Mantelabschnitt 9 und dem zweiten Mantelabschnitt 12 ein Ringraum 18 zur Aufnahme des Rohres 4 bildet.

Bevorzugt wird der Verbinderkörper 5 in einem Tiefziehverfahren hergestellt, wobei sämtliche Wandstärken der Mantelabschnitte des Verbinderkörpers 5 in etwa gleich groß sein können.

Im Bereich des ersten Mantelabschnittes 9 weist der Steckverbinder 2 einen Aufnahmeraum 19 auf. Der Aufnahmeraum 19 wird vom ersten Mantelabschnitt 9 umgeben und dient zur Aufnahme eines Teils des Gegensteckverbinders 3.

Der Verbinderkörper 5 weist mehrere, in Umfangsrichtung voneinander beabstandete Durchtrittsöffnungen 20 auf, welche den ersten Mantelabschnitt 9 und sofern vorhanden auch den zweiten Mantelabschnitt 12 durchdringen. In der Raststellung des Arretierungselementes 6, welche dieses im eingesteckten und verrasteten Zustand einnimmt, ragt das Arretierungselement 6 durch die jeweilige Durchtrittsöffnung 20 in den Aufnahmeraum 19. In diesen Abschnitten wirkt das Arretierungselement 6 mit einer Sicherungsnut 21 des Gegensteckverbinders 3 zusammen.

In Fig. 2 ist gut ersichtlich, dass das Arretierungselement 6 beispielsweise vier Rastbereiche 22 aufweisen kann, welche zum Durchragen durch die Durchtrittsöffnungen 20 des Verbinderkörpers 5 ausgebildet sind. Die Rastbereiche 22 sind daher als nach innen stehende V-förmige Elemente ausgebildet.

Darüber hinaus kann vorgesehen sein, dass das Arretierungselement 6 einen Haltebereich 23 aufweist, an welchem es gegriffen werden kann, um in den Verbinderkörper 5 eingesetzt werden zu können und zwischen der Raststellung und der Freigabestellung bewegt werden zu können.

Wenn sich das Arretierungselement 6 in seiner Raststellung befindet ragen die Rastbereiche 22 in den Aufnahmeraum 19 und der Gegensteckverbinder 3 ist relativ zum Steckverbinder 2 axial gesichert. Wenn sich das Arretierungselement 6 in seiner Freigabestellung befindet ragen die Rastbereiche 22 nicht in den Aufnahmeraum 19 und der Gegensteckverbinder 3 ist relativ zum Steckverbinder 2 axial verschiebbar.

Im vorliegenden Ausführungsbeispiel des Steckverbinders 2, welcher in den Figuren 1 und 2 dargestellt ist, ist am Haltebereich 23 des Arretierungselementes 6 ein Anzeigeelement 24 angeordnet, welches zur Signalisierung dient, ob das Arretierungselement 6 korrekt arretiert ist. Insbesondere ist eine Führungsaufnahme 25 ausgebildet, welche zur verschiebbaren Aufnahme des Anzeigeelementes 24 dient. Das Anzeigeelement 24 ist derart in der Führungsaufnahme 25 aufgenommen, dass das Anzeigeelement 24 zwischen einer Ruheposition und einer Anzeigeposition verschiebbar ist.

In der Darstellung nach Fig. 2 befindet sich das Anzeigeelement 24 in seiner Ruheposition. Das Anzeigeelement 24 befindet sich in der Darstellung nach Fig. 2 deswegen in seiner Ruheposition, da kein Gegensteckverbinder 3 im Aufnahmeraum 19 des Steckverbinders 2 aufgenommen ist. Wie aus Fig. 2 weiters ersichtlich, kann vorgesehen sein, dass die Führungsaufnahme 25 als Blechumformteil ausgebildet ist, wobei das Anzeigeelement 24 von der Führungsaufnahme 25 zumindest teilweise umschlossen ist.

Insbesondere kann vorgesehen sein, dass die Führungsaufnahme 25 als Stanzteil ausgebildet ist, welches zwei Laschen aufweist, wobei die beiden Laschen zu einem hülsenförmigen Gebilde gebogen werden.

Wie aus Fig. 2 weiters ersichtlich, kann vorgesehen sein, dass im ersten Mantelabschnitt 9 oder im zweiten Mantelabschnitt 12 eine Betätigungsausnehmung 26 ausgebildet ist, durch welche ein am Anzeigeelement 24 ausgebildeter Betätigungsbereich 27 in den Aufnahmeraum 19 ragt.

Der Betätigungsbereich 27 kann einstückig an das Anzeigeelement 24 angeformt sein. Insbesondere kann vorgesehen sein, dass das Anzeigeelement 24 und der Betätigungsbereich 27 einteilig als Spritzgussteil ausgebildet sind.

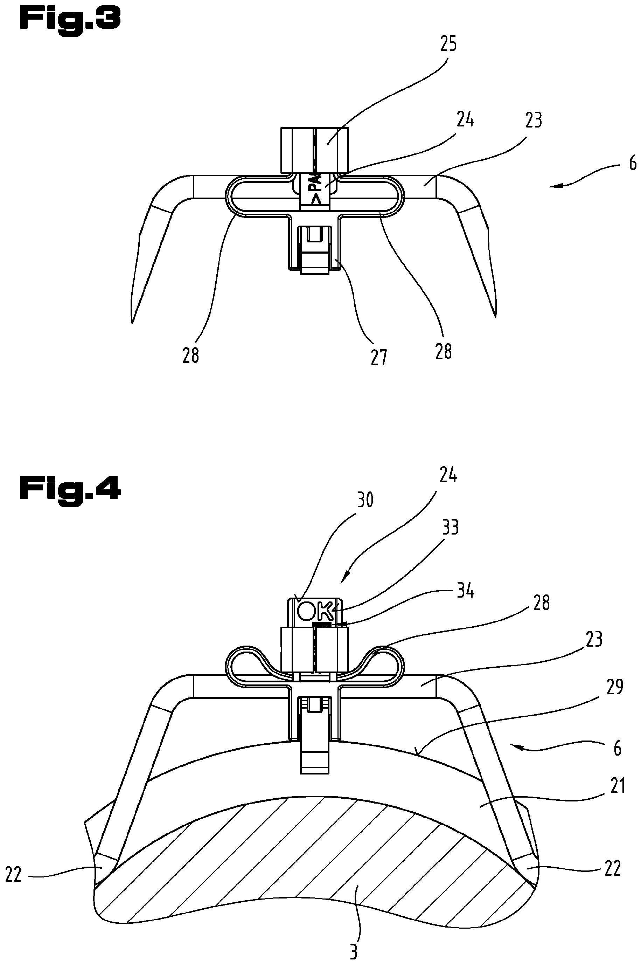

In einer Detailansicht nach Fig. 3 ist das Anzeigeelement 24 in seiner Ruheposition befindlich dargestellt. Zur besseren Übersichtlichkeit ist in der Fig. 3 ausschließlich das Arretierungselement 6 mit der am Haltebereich 23 befestigten Führungsaufnahme 25 und dem Anzeigeelement 24 dargestellt.

Wie aus Fig. 3 weiters ersichtlich, kann vorgesehen sein, dass mit dem Anzeigeelement 24 ein Federelement 28 gekoppelt ist, mittels welchem das Anzeigeelement 24 in seine Ruheposition gedrängt bzw. vorgespannt ist. Das Federelement 28 kann ebenfalls einteilig mit dem Anzeigeelement 24 ausgeformt sein.

In Fig. 4 ist das Anzeigeelement 24 in seiner Anzeigeposition dargestellt. Zur Veranschaulichung der Funktion des Anzeigeelementes 24 ist in Fig. 4 der Gegensteckverbinder 3 in einer Querschnittansicht im Bereich der Sicherungsnut 21 dargestellt. Wie aus Fig. 4 weiters ersichtlich, sind in der dargestellten Ansicht die Rastbereiche 22 des Arretierungselementes 6 in der Sicherungsnut 21 positioniert und somit das Arretierungselement 6 korrekt arretiert. In diesem Zustand liegt der Betätigungsbereich 27 an einem Außenbereich 29 des Gegensteckverbinders 3 an, wodurch das Anzeigeelement 24 entgegen der Federkraft des Federelementes 28 in seine Anzeigeposition gedrückt wird. Das Anzeigeelement 24 ist somit teilweise aus der Führungsaufnahme 25 hervorstehend herausgeschoben, sodass eine Anzeigefläche 30 des Anzeigeelementes 24 sichtbar wird.

Wie aus Fig. 4 weiters ersichtlich, kann vorgesehen sein, dass die Anzeigefläche 30 des Anzeigeelementes 24 gleichzeitig als Codierungsfläche 33 dient, an welcher ein Code 34 angeordnet ist.

Die Anzeigefläche 30 kann eine Signalisierungsfarbe, wie etwa eine grüne Farbe, aufweisen, um signalisieren zu können, dass das Arretierungselement 6 korrekt arretiert ist. Alternativ oder zusätzlich ist es auch denkbar, dass an der Anzeigefläche 30 ein Schriftzug angeordnet ist, oder dass die Anzeigefläche 30 entsprechend von einem Schriftzug durchsetzt ist, welche ebenfalls das korrekte arretieren des Arretierungselementes 6 signalisiert.

Dass das Anzeigeelement 24 entgegen der Federkraft des Federelementes 28 in seine Anzeigeposition gedrängt wird, kann dadurch erreicht werden, dass eine Nutbreite 31 der Sicherungsnut 21 so klein bemessen ist, dass der Betätigungsbereich 27 des Anzeigeelementes 24 nicht in die Sicherungsnut 21 eingeschoben werden kann.

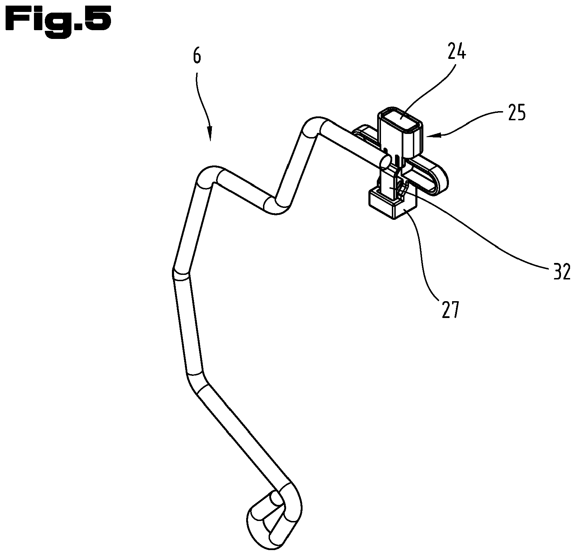

In Fig. 5 ist das Anzeigeelement 24, die Führungsaufnahme 25 und ein teilweise geschnitten dargestelltes Arretierungselement 6 in einer perspektivischen Ansicht dargestellt. Das Anzeigeelement 24 befindet sich in der Darstellung nach Fig. 5 in seiner Ruheposition. Wie aus Fig. 5 gut ersichtlich, kann vorgesehen sein, dass die Führungsaufnahme 25 einen Führungszapfen 32 aufweist, welcher mit dem Betätigungsbereich 27 des Anzeigeelementes 24 korrespondiert. Insbesondere kann vorgesehen sein, dass das Anzeigeelement 24 durch den Führungszapfen 32 verbessert geführt wird.

Das in den Fig. 1-5 dargestellte Ausführungsbeispiel des Steckverbinders 2 weist den Vorteil auf, dass durch die Anordnung des Anzeigeelementes 24 am Arretierungselement 6 bzw. durch die Ausbildung des Betätigungsbereiches 27 erreicht werden kann, dass das Anzeigeelement 24 nur dann in seine Anzeigeposition gedrückt wird, wenn zum einen der Steckverbinder in den Gegensteckverbinder 3 eingesteckt ist und darüber hinaus das Arretierungselement 6 korrekt arretiert ist.

Anhand einer Zusammenschau der Figuren 1-5 wird im Folgenden der Zusammenbau des Steckverbinders 2 mit dem Gegensteckverbinder 3 beschrieben.

In einem ersten Verfahrensschritt werden der Steckverbinder 2 und der Gegensteckverbinder 3 bereitgestellt, insbesondere wird am Steckverbinder 2 das Arretierungselement 6 derart in Stellung gebracht, dass der Gegensteckverbinder 3 einfach in den Aufnahmeraum 19 des Steckverbinders 2 eingesteckt werden kann.

Wenn nun der Gegensteckverbinder 3 in den Aufnahmeraum 19 des Steckverbinders 2 eingesteckt ist und richtig positioniert ist, wird das Arretierungselement 6 in seine Raststellung verbracht, sodass die Rastbereiche 22 des Arretierungselementes 6 in die Sicherungsnut 21 des Gegensteckverbinders 3 eingreifen. Hierbei kommt der Betätigungsbereich 27 am Außenbereich 29 des Gegensteckverbinders 3 zum Anliegen, wodurch das Anzeigeelement 24 in seine Anzeigestellung gedrängt wird und somit vom Monteur erfasst werden kann, dass der Steckverbinder korrekt in den Gegensteckverbinder eingesteckt ist und das Arretierungselement 6 korrekt arretiert ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Steckerbaugruppe | 30 | Anzeigefläche |
| 2 | Steckverbinder | 31 | Nutbreite |
| 3 | Gegensteckverbinder | 32 | Führungszapfen |
| 4 | Rohr | 33 | Codierungsfläche |
| 5 | Verbinderkörper | 34 | Code |
| 6 | Arretierungselement | 35 | Betätigungsfederelement |
| 7 | Längsachse des Steckverbinders | 36 | Auslösemechanismus |
| 8 | Steckerdichtung | 37 | Arretierungsnase |
| 9 | erster Mantelabschnitt | | |
| 10 | innenliegende Mantelfläche | | |
| 11 | außenliegende Mantelfläche | | |
| 12 | zweiter Mantelabschnitt | | |
| 13 | erster Endabschnitt Steckverbinder | | |
| 14 | Stirnwandabschnitt | | |
| 15 | innenliegende Mantelfläche | | |
| 16 | außenliegende Mantelfläche | | |
| 17 | Dichtungsaufnahme Steckverbinder | | |
| 18 | Ringraum | | |
| 19 | Aufnahmeraum | | |
| 20 | Durchtrittsöffnung | | |
| 21 | Sicherungsnut | | |
| 22 | Rastbereich | | |
| 23 | Haltebereich | | |
| 24 | Anzeigeelement | | |
| 25 | Führungsaufnahme | | |
| 26 | Betätigungsausnehmung | | |
| 27 | Betätigungsbereich | | |
| 28 | Federelement | | |
| 29 | Außenbereich | | |

## Patentansprüche

1. Steckverbinder (2) und Gegensteckverbinder (3) zum Verbinden von Leitungen für flüssige oder gasförmige Medien, der Steckverbinder (2) umfassend
- einen Verbinderkörper (5), welcher zumindest einen ersten Mantelabschnitt (9) aufweist, welcher einen Aufnahmeraum (19) zur Aufnahme eines Teils des Gegensteckverbinders (3) bildet, wobei im ersten Mantelabschnitt (9) zumindest zwei Durchtrittsöffnungen (20) ausgebildet sind;
- ein Arretierungselement (6), welches zum Sichern des Steckverbinders (2) relativ zum Gegensteckverbinder (3) vorgesehen ist, wobei die Durchtrittsöffnungen (20) im ersten Mantelabschnitt (9) des Verbinderkörpers (5) zur Aufnahme des Arretierungselementes (6) dienen, wobei ein Anzeigeelement (24) ausgebildet ist, und wobei eine Führungsaufnahme (25) zur verschiebbaren Aufnahme des Anzeigeelementes (24) ausgebildet ist, wobei das Anzeigeelement (24) derart in der Führungsaufnahme (25) aufgenommen ist, dass das Anzeigeelement (24) zwischen einer Ruheposition und einer Anzeigeposition verschiebbar ist, wobei das Anzeigeelement (24) eine Anzeigefläche (30) aufweist, welche in der Anzeigeposition des Anzeigeelementes (24) sichtbar und in der Ruheposition des Anzeigeelementes (24) zumindest teilweise verdeckt ist, **dadurch gekennzeichnet, dass** die Anzeigefläche (30), wenn sie sichtbar ist, zur Signalisierung dient, dass der Steckverbinder (2) korrekt in den Gegensteckverbinder (3) eingesteckt ist und dass das Arretierungselement (6) korrekt arretiert ist,
wobei
die Führungsaufnahme (25) in Form einer Führungshülse ausgebildet ist, welche mit dem Haltebereich (23) des Arretierungselementes (6) gekoppelt ist, wobei das Anzeigeelement (24) in dessen Ruheposition innerhalb der Führungsaufnahme (25) angeordnet ist und in dessen Anzeigeposition zumindest teilweise gegenüber der Führungsaufnahme (25) hervorsteht, wobei das Anzeigeelement (24) mit einem Betätigungsbereich (27) gekoppelt ist, welcher größer ist als eine Nutbreite (31) einer Sicherungsnut (21) des Gegensteckverbinders (3), wobei der Betätigungsbereich (27) derart ausgebildet ist, dass er in einem Außenbereich (29) der Sicherungsnut (21) anliegt, so dass er das Anzeigeelement (24) in die Anzeigeposition drängt, wenn alle Rastbereiche (22) des Arretierungselementes (6) in die Sicherungsnut (21) des Gegensteckverbinders (3) eingreifen.

2. Steckverbinder (2) und Gegensteckverbinder (3) nach Anspruch 1, **dadurch gekennzeichnet, dass** das Anzeigeelement (24) derart ausgebildet ist, dass es sich automatisch von der Ruheposition in die Anzeigeposition verschiebt, wenn der Steckverbinder (2) korrekt in den Gegensteckverbinder (3) eingesteckt ist und/oder wenn das Arretierungselement (6) korrekt arretiert ist.

3. Steckverbinder (2) und Gegensteckverbinder (3) nach einem der vorhergehenden Ansprüche, **dadurch gekennzeichnet, dass** das Anzeigeelement (24) an einem Haltebereich (23) des Arretierungselementes (6) angeordnet ist.

4. Steckverbinder (2) und Gegensteckverbinder (3) nach einem der vorhergehenden Ansprüche, **dadurch gekennzeichnet, dass** die Führungsaufnahme (25) als Blechumformteil ausgebildet ist.

5. Steckverbinder (2) und Gegensteckverbinder (3) nach einem der vorhergehenden Ansprüche, **dadurch gekennzeichnet, dass** ein Federelement (28) ausgebildet ist, mittels welchem das Anzeigeelement (24) in seine Ruheposition vorgespannt ist.

6. Steckverbinder (2) und Gegensteckverbinder (3) nach Anspruch 5, **dadurch gekennzeichnet, dass** im ersten Mantelabschnitt (9) eine Betätigungsausnehmung (26) ausgebildet ist, durch welche der Betätigungsbereich (27) in den Aufnahmeraum (19) ragt.

7. Steckverbinder (2) und Gegensteckverbinder (3) nach einem der vorhergehenden Ansprüche, **dadurch gekennzeichnet, dass** die Anzeigefläche (30) zumindest bereichsweise in einer entsprechenden Signalfarbe, wie etwa grün ausgebildet ist und/oder dass an der Anzeigefläche (30) ein Schriftzug, wie etwa "OK" angeordnet ist.

8. Steckverbinder (2) und Gegensteckverbinder (3) nach einem der vorhergehenden Ansprüche, **dadurch gekennzeichnet, dass** das Anzeigeelement (24) eine Codierungsfläche (33) aufweist, welche in der Anzeigeposition des Anzeigeelementes (24) sichtbar und in der Ruheposition des Anzeigeelementes (24) zumindest teilweise verdeckt ist, wobei die Codierungsfläche (33) einen maschinenlesbaren Code (34), wie etwa einen Data Matrix Code, aufweist.

9. Verfahren zum Herstellen einer Steckverbindung zwischen einem Steckverbinder (2) zum Verbinden von Leitungen für flüssige oder gasförmige Medien und einem Gegensteckverbinder (3), umfassend die Verfahrensschritte:
- Bereitstellen des Steckverbinders (2) nach Anspruch 1;
- Bereitstellen des Gegensteckverbinders (3) nach Anspruch 1;
- Einstecken des Gegensteckverbinders (3) in den Aufnahmeraum (19) des Steckverbinders (2);
- Sichern des Gegensteckverbinders (3) im Aufnahmeraum (19) des Steckverbinders (2) mittels des Arretierungselementes (6),
wobei
ein Anzeigeelement (24) ausgebildet ist, und dass eine Führungsaufnahme (25) zur verschiebbaren Aufnahme des Anzeigeelementes (24) ausgebildet ist, wobei das Anzeigeelement (24) derart in der Führungsaufnahme (25) aufgenommen ist, dass das Anzeigeelement (24) von einer Ruheposition in eine Anzeigeposition verschoben wird, wenn der Steckverbinder (2) korrekt in den Gegensteckverbinder (3) eingesteckt wird und wenn das Arretierungselement (6) korrekt arretiert wird, wobei das Anzeigeelement (24) eine Anzeigefläche (30) aufweist, welche in der Anzeigeposition des Anzeigeelementes (24) sichtbar und in der Ruheposition des Anzeigeelementes (24) zumindest teilweise verdeckt ist, **dadurch gekennzeichnet, dass** die Anzeigefläche (30), wenn sie sichtbar ist, zur Signalisierung dient, dass der Steckverbinder (2) korrekt in den Gegensteckverbinder (3) eingesteckt ist und das Arretierungselement (6) korrekt arretiert ist.

10. Verfahren nach Anspruch 9, **dadurch gekennzeichnet, dass** eine Codierungsfläche (33) am Anzeigeelement (24) sichtbar wird, wenn der Steckverbinder (2) korrekt in den Gegensteckverbinder (3) eingesteckt ist und/oder wenn das Arretierungselement (6) korrekt arretiert ist, wobei ein an der Codierungsfläche (33) angeordneter maschinenlesbarer Code (34) mittels eines Lesegerätes erfasst wird und in einem System zur Datenverarbeitung gespeichert wird.

11. Verfahren nach einem der Ansprüche 9 bis 10, **dadurch gekennzeichnet, dass** sich das Anzeigeelement (24) automatisch von der Anzeigeposition zurück in die Ruheposition verschiebt, wenn das Arretierungselement (6) geöffnet wird.

## Claims

1. A plug connector (2) and a mating plug connector (3) for connecting lines for liquid or gaseous media, the plug connector (2) comprising
- a connector body (5), which has at least a first casing section (9), which forms a receiving space (19) for receiving a part of the mating plug connector (3), wherein at least two passages (20) are formed in the first casing section (9);
- a locking element (6), which is provided for securing the plug connector (2) relative to the mating plug connector (3), wherein the passages (20) in the first casing section (9) of the connector body (5) serve to receive the locking element (6),
wherein an indicator element (24) is formed, and wherein a guide receptacle (25) for receiving the indicator element (24) in a displaceable manner is formed, wherein the indicator element (24) is received in the guide receptacle (25) such that the indicator element (24) is displaceable between a rest position and an indicator position, wherein the indicator element (24) has an indicator surface (30), which is visible in the indicator position of the indicator element (24) and, in the rest position of the indicator element (24), is at least partially concealed, **characterized in that** the indicator surface (30), when it is visible, serves to signal that the plug connector (2) is plugged into the mating plug connector (3) correctly, and that the locking element (6) is locked correctly,
wherein
the guide receptacle (25) is designed in the form of a guide sleeve, which is coupled to the holding region (23) of the locking element (6), wherein the indicator element (24), in its rest position, is arranged within the guide receptacle (25) and, in its indicator position, at least partially protrudes relative to the guide receptacle (25), wherein the indicator element (24) is coupled to an actuation region (27), which is greater than a groove width (31) of a securing groove (21) of the mating plug connector (3), wherein the actuation region (27) is designed such that it abuts in an outer region (29) of the securing groove (21), so that it urges the indicator element (24) into the indicator position when all latching regions (22) of the locking element (6) engage with the securing groove (21) of the mating plug connector (3).

2. The plug connector (2) and the mating plug connector (3) according to claim 1, **characterized in that** the indicator element (24) is designed such that it automatically shifts from the rest position into the indicator element when the plug connector (2) is plugged into the mating plug connector (3) correctly and/or when the locking element (6) is locked correctly.

3. The plug connector (2) and the mating plug connector (3) according to one of the preceding claims, **characterized in that** the indicator element (24) is arranged on a holding region (23) of the locking element (6).

4. The plug connector (2) and the mating plug connector (3) according to one of the preceding claims, **characterized in that** the guide receptacle (25) is formed as a formed sheet metal part.

5. The plug connector (2) and the mating plug connector (3) according to one of the preceding claims, **characterized in that** a spring element (28) is formed, by means of which the indicator element (24) is preloaded into its rest position.

6. The plug connector (2) and the mating plug connector (3) according to claim 5, **characterized in that** an actuation recess (26) is formed in the first casing section (9), through which actuation recess (26) the actuation region (27) projects into the receiving space (19).

7. The plug connector (2) and the mating plug connector (3) according to one of the preceding claims, **characterized in that** the indicator surface (30) is designed, at least in some regions, to have a corresponding signal color, such as green, and/or that a lettering, such as "OK", is arranged on the indicator surface (30).

8. The plug connector (2) and the mating plug connector (3) according to one of the preceding claims, **characterized in that** the indicator element (24) has a coding surface (33), which is visible in the indicator position of the indicator element (24) and, in the rest position of the indicator element (24), is at least partially concealed, wherein the coding surface (33) has a machine-readable code (34), such as a data matrix code.

9. A method for establishing a plug connection between a plug connector (2) for connecting pipes for liquid or gaseous media and a mating plug connector (3), comprising the method steps:
- providing the plug connector (2) according to claim 1;
- providing the mating plug connector (3) according to claim 1;
- plugging the mating plug connector (3) into the receiving space (19) of the plug connector (2);
- securing the mating plug connector (3) in the receiving space (19) of the plug connector (2) by means of the locking element (6),
wherein
an indicator element (24) is formed, and that a guide receptacle (25) for receiving the indicator element (24) in a displaceable manner is formed, wherein the indicator element (24) is received in the guide receptacle (25) such that the indicator element (24) is displaced from a rest position into an indicator position when the plug connector (2) is plugged into the mating plug connector (3) correctly and when the locking element (6) is locked correctly, wherein the indicator element (24) has an indicator surface (30), which is visible in the indicator position of the indicator element (24) and, in the rest position of the indicator element (24), is at least partially concealed, **characterized in that** the indicator surface (30), when it is visible, serves to signal that the plug connector (2) is plugged into the mating plug connector (3) correctly, and the locking element (6) is locked correctly.

10. The method according to claim 9, **characterized in that** a coding surface (33) becomes visible on the indicator element (24) when the plug connector (2) is plugged into the mating plug connector (3) correctly and/or when the locking element (6) is locked correctly, wherein a machine-readable code (34) arranged on the coding surface (33) is detected by means of a reader and is stored in a system for data processing.

11. The method according to one of claims 9 to 10, **characterized in that** the indicator element (24) automatically shifts from the indicator position back into the rest position when the locking element (6) is opened.

## Revendications

1. Connecteur enfichable (2) et contre-connecteur enfichable (3) pour le raccordement de conduites pour des milieux liquides ou gazeux, ce connecteur enfichable (2) comprenant
- un corps de connecteur (5) qui comprend au moins une première portion d'enveloppe (9), qui constitue un espace de logement (19) pour le logement d'une partie du contre-connecteur enfichable (3), dans lequel, dans la première portion d'enveloppe (9), sont réalisées au moins deux ouvertures de passage (20) ;
- un élément d'arrêt (6) qui est conçu pour la sécurisation du connecteur enfichable (2) par rapport au contre-connecteur enfichable (3), dans lequel les ouvertures de passage (20) permettent, dans la première portion d'enveloppe (9) du corps de connecteur (5), au logement de l'élément d'arrêt (6), dans lequel un élément d'affichage (24) est réalisé et dans lequel un logement de guidage (25) pour le logement coulissant de l'élément d'affichage (24), dans lequel l'élément d'affichage (24) est logé dans le logement de guidage (25), de sorte que l'élément d'affichage (24) peut coulisser entre une position de repos et une position d'affichage, dans lequel l'élément d'affichage (24) présente une surface d'affichage (30), qui est visible dans la position d'affichage de l'élément d'affichage (24) et est dissimulé, dans la position de repos de l'élément d'affichage (24) au moins partiellement, **caractérisé en ce que** la surface d'affichage (30), lorsqu'elle visible, permet de signaler que le connecteur enfichable (2) est correctement inséré dans le contre-connecteur enfichable (3) et **en ce que** l'élément d'arrêt (6) est correctement bloqué,
dans lequel
le logement de guidage (25) se présente sous la forme d'un manchon de guidage qui est couplé avec la partie de maintien (23) de l'élément d'arrêt (6), dans lequel l'élément d'affichage (24) est disposé, dans sa position de repos, à l'intérieur du logement de guidage (25) et dépasse, dans sa position d'affichage, au moins partiellement par rapport au logement de guidage (25), dans lequel l'élément d'affichage (24) est couplé avec une partie d'actionnement (27), qui est plus grande qu'une largeur de rainure (31) d'une rainure de fixation (21) du contre-connecteur enfichable (3), dans lequel la partie d'actionnement (27) est conçue de sorte que, dans une partie externe (29), elle s'appuie contre la rainure de fixation (21), de sorte qu'il comprime l'élément d'affichage (24), dans la position d'affichage, lorsque toutes les parties d'encliquetage (22) de l'élément d'arrêt (6) s'emboîtent dans la rainure de fixation (21) du contre-connecteur enfichable (3).

2. Connecteur enfichable (2) et contre-connecteur enfichable (3) selon la revendication 1, **caractérisé en ce que** l'élément d'affichage (24) est réalisé de sorte qu'il coulisse automatiquement de la position de repos vers la position d'affichage lorsque le connecteur enfichable (2) est inséré correctement dans le contre-connecteur enfichable (3) et/ou lorsque l'élément d'arrêt (6) est correctement bloqué.

3. Connecteur enfichable (2) et contre-connecteur enfichable (3) selon l'une des revendications précédentes, **caractérisé en ce que** l'élément d'affichage (24) est disposé sur une partie de maintien (23) de l'élément d'arrêt (6).

4. Connecteur enfichable (2) et contre-connecteur enfichable (3) selon l'une des revendications précédentes, **caractérisé en ce que** le logement de guidage (25) est réalisé sous la forme d'une pièce formée en tôle.

5. Connecteur enfichable (2) et contre-connecteur enfichable (3) selon l'une des revendications précédentes, **caractérisé en ce qu'**un élément de ressort (28) est prévu, au moyen duquel l'élément d'affichage (24) est précontraint dans sa position de repos.

6. Connecteur enfichable (2) et contre-connecteur enfichable (3) selon la revendication 5, **caractérisé en ce que**, dans la première portion d'enveloppe (9), est réalisé un évidement d'actionnement (26) à travers lequel la partie d'actionnement (27) dépasse dans l'espace de logement (19).

7. Connecteur enfichable (2) et contre-connecteur enfichable (3) selon l'une des revendications précédentes, **caractérisé en ce que** la surface d'affichage (30) est réalisée, au moins à certains endroits, avec une couleur de signalisation correspondante, par exemple verte, et/ou **en ce que**, sur la surface d'affichage (30) est disposée une inscription, par exemple « OK ».

8. Connecteur enfichable (2) et contre-connecteur enfichable (3) selon l'une des revendications précédentes, **caractérisé en ce que** l'élément d'affichage (24) présente une surface de codage (33) qui est visible dans la position d'affichage de l'élément d'affichage (24) et qui est dissimulée, dans la position de repos de l'élément d'affichage (24), au moins partiellement, dans lequel la surface de codage (33) présente un code lisible par une machine (34), par exemple un Data Matrix Code.

9. Procédé de fabrication d'une liaison enfichée entre un connecteur enfichable (2) pour le raccordement de conduites pour des milieux liquides ou gazeux et un contre-connecteur enfichable (3), comprenant les étapes suivantes :
- mise à disposition du connecteur enfichable (2) selon la revendication 1 ;
- mise à disposition du contre-connecteur enfichable (3) selon la revendication 1 ;
- insertion du contre-connecteur enfichable (3) dans l'espace de logement (19) du connecteur enfichable (2) ;
- fixation du contre-connecteur enfichable (3) dans l'espace de logement (19) du connecteur enfichable (2) au moyen de l'élément d'arrêt (6),
dans lequel
un élément d'affichage (24) est prévu, et un logement de guidage (25) pour le logement coulissant de l'élément d'affichage (24) est prévu, dans lequel l'élément d'affichage (24) est logé dans le logement de guidage (25) de sorte que l'élément d'affichage (24) est coulissé d'une position de repos vers une position d'affichage lorsque le connecteur enfichable (2) est correctement inséré dans le contre-connecteur enfichable (3) et lorsque l'élément d'arrêt (6) est correctement bloqué, dans lequel l'élément d'affichage (24) présente une surface d'affichage (30), qui est visible dans la position d'affichage de l'élément d'affichage (24) et qui est dissimulé partiellement dans la position de repos de l'élément d'affichage (24), **caractérisé en ce que** la surface d'affichage (30), lorsqu'elle est visible, permet de signaler que le connecteur enfichable (2) est correctement inséré dans le contre-connecteur enfichable (3) et l'élément d'arrêt (6) est correctement bloqué.

10. Procédé selon la revendication 9, **caractérisé en ce qu'**une surface de codage (33) est visible sur l'élément d'affichage (24) lorsque le connecteur enfichable (2) est correctement inséré dans le contre-connecteur enfichable (3) et/ou lorsque l'élément d'arrêt (6) est correctement bloqué, dans lequel un code lisible par une machine (34) disposé sur la surface de codage (33) est détecté au moyen d'un appareil de lecture et est enregistrée dans un système de traitement de données.

11. Procédé selon l'une des revendications 9 à 10, **caractérisé en ce que** l'élément d'affichage (24) se déplace automatiquement de la position d'affichage à nouveau vers la position de repos lorsque l'élément d'arrêt (6) est ouvert.
